# EUROPÄISCHE PATENTSCHRIFT

(11) **EP 1 718 544 B1**
(45) Veröffentlichungstag und Bekanntmachung des Hinweises auf die Patenterteilung: **07.01.2009**
(21) Anmeldenummer: 05707639.0
(22) Anmeldetag: 25.02.2005
(51) Int. Cl.: B65D 77/06

(54) **PALETTENCONTAINER**
PALLET CONTAINER
CONTENEUR PALETTE

(30) Priorität: 27.02.2004 DE 202004003236 U
(43) Veröffentlichungstag der Anmeldung: 08.11.2006
(73) Patentinhaber: Mauser-Werke GmbH, 50321 Brühl (DE)
(72) Erfinder: SCHMIDT, Klaus, Peter, 53123 Bonn (DE); WEYRAUCH, Detlev, 52372 Kreuzau- Untermaubach (DE); PRZYTULLA, Dietmar, 50170 Kerpen (DE); WURZER, Ernst, 53639 Königswinter (DE)
(86) Internationale Anmeldenummer: PCT/EP2005/002039
(87) Internationale Veröffentlichungsnummer: WO 2005/082739

(56) Entgegenhaltungen:
- EP-A- 0 704 385
- DE-A1- 3 442 700
- US-B1- 6 360 907

## Beschreibung

Die Erfindung betrifft einen Palettencontainer für die Lagerung und den Transport von flüssigen oder fließfähigen Füllgütern, mit einem dünnwandigen Innenbehälter aus thermoplastischem Kunststoff, mit einem den Kunststoff-Innenbehälter als Stützmantel dicht umschließenden Gitterrohrrahmen und mit einer Bodenpalette, auf welcher der Kunststoff-Innenbehälter aufliegt und mit welcher der Gitterrohrrahmen fest verbunden ist, wobei der Kunststoff-Innenbehälter zur Entnahme des flüssigen Füllgutes seitlich unten, etwa mittig in einer Seitenwandung im Nahbereich seines Bodens einen angeblasenen, kalibrierten rohrförmigen Stutzen aufweist, auf welchem eine verschließbare Entnahmearmatur befestigbar ist. Weiterhin betrifft die Erfindung ein Verfahren zur Herstellung eines solchen Palettencontainers.

### Stand der Technik :

Der Konstruktionsaufbau von derartigen Palettencontainern ist allgemein bekannt und mit seinen wesentlichen Bauteilen z. B. in der Veröffentlichung DE-A 34 42 701 (We) beschrieben. Üblicherweise werden Entnahmearmaturen mittels Überwurfmutter auf den mit einem Außengewinde versehenen Auslaufstutzen des Innenbehälters aufgeschraubt; es sind aber weiterhin auch angeschweißte Entnahmearmatur-Verbindungen bekannt. Ein Palettencontainer mit direkt an den Kunststoff-Innenbehälter angeschweißter Entnahmearmatur ist z. B. aus der Druckschrift DE-A 34 42 700 (We) bekannt. Dabei wird nach dem Blasformvorgang zunächst eine bodennahe Öffnung in den Innenbehälter eingebracht, in welche das Gehäuse der Entnahmearmatur etwa zur Hälfte eingesteckt und gegen die Wandung des Innenbehälters verschweißt wird.

Weiterhin sind aus dem Stand der Technik Ausführungen mit vorgefertigten Gewindestutzen oder ganzen Armaturgehäusen als Einlegeteil in die geöffnete Blasform mit einer nachfolgenden Verschweißung mit dem Kunststoffbehälter während des Blasformprozesses bekannt. Diese Ausführungsvarianten besitzen jedoch besondere Nachteile :
- Das Einlegen des Gewindestutzens oder Gehäuses in die Blasform ist kompliziert und nicht ungefährlcih,
- die Verschweißung des Einlegeteils mit dem Innenbehälter im Blasformprozeß selbst ist vergleichsweise undefiniert (kein präzise kontrolierbarer Anpreßdruck),
- die Durchflußöffnung im Innenbehälter muß nachträglich durch den Stutzen bzw. das Ventilgehäuse geöffnet werden (z.B. Bohren mit entsprechender Verunreinigung)
- die Armatur muß am Behälter komplettiert werden (kompliziert),
- die Prüfung des kritischen Bauteils "Armatur" kann nur am Behälter selbst erfolgen.
- die Ausführungen mit direkt an die Behälterwandung angeschweißten Armaturen stellen eine spezielle Variante dar, bei welcher der Innenbehälter nicht für schraubbare Armaturen verwendbar ist; dies ist z. B. nachteilig für eine spätere Rekonditionierung.

Die aus der Druckschrift DE-A 34 42 700 bekannte Ausführung mit angeschweißter Auslaufarmatur-Verbindung weist die folgenden Nachteile auf :
- das Herstellungsverfahren des Innenbehälters ist speziell auf die Konstruktionsart einer Schieberarmatur abgestimmt,
- die Auslauföffnung wird nachträglich, d. h. nach dem Blasformvorgang aber vor dem Verschweißen der Auslaufarmatur, in den Innenbehälter eingebracht,
- der Bereich des Innenbehälters an welchem die Auslaufarmatur angeschweißt wird ist ohne zusätzliche Hilfsmittel geblasen, d.h. die dünnen Wandstärken resultieren aus dem Blasprozeß und unterliegen den üblichen Schwankungen mit ungenügender Reproduzierbarkeit und geringer Stabilität (Biegesteifigkeit),
- die Innenbehälter-Ausführung stellt eine spezielle Variante dar, welche nicht für aufschraubbare Armaturen verwendbar ist.

Aus der Veröffentlichung EP-A 0 704 385 (Prot) ist ein Palettenbehälter bekannt, bei dem der Gewindestutzen als vorgefertigtes Spritzgußteil in die Blasform eingelegt und auf den Kunststoff-Innenbehälter aufgeschweißt ist, wobei die Entnahmearmatur später mittels Überwurfmutter aufgeschraubt wird.

Es ist Aufgabe der Erfindung, einen Palettenbehälter mit Kunststoff-Innenbehälter anzugeben, wobei der Innenbehälter einen angeblasenen, kalibrierten rohrförmigen Stutzen aufweist, bei dem die Entnahmearmatur-Verbindung kostengünstig herstellbar ist und insbesondere eine hohe Belastbarkeit (Biegesteifigkeit) bei der Handhabung der Entnahmearmatur zur Füllgutentnahme aufweist.

Die Erfindung zeichnet sich durch eine mittels Verschweißen oder Verkleben fest mit dem Stutzen des Innenbehälters verbundene Armatur aus. Bei einer Schweißverbindung können verschiedene Verfahren wie das Spiegelschweißen, das Laserschweißen, das Reibschweißen, das Ultraschallschweißen oder das Vibrationsschweißen zum Einsatz kommen. In einer bevorzugten Ausführung wird das Spiegelschweißen angewandt, weil es bei guter Zugänglichkeit der Schweißstelle sehr wirtschaftlich ist. Aber auch ein Verkleben mittels eines besonderen Kunststoffklebers ist einfach und preiswert durchführbar. Gegenüber mittels Überwurfmutter auf den Auslaufstutzen des Innenbehälters aufgeschraubten Entnahmearmatur-Verbindungen besitzt eine feste Verbindung folgende Vorteile :
- Höhere Sicherheit: Schraubverbindungen und insbesondere die darin notwendigerweise verwendeten Ringdichtungen stellen immer ein Gefahrenpotential hinsichtlich Undichtigkeiten dar. Bisher verwendbare Dichtungen weisen entweder schlechte Dichteigenschaften (geringes Rückstellvermögen, Kaltfluß, hohe Härte) oder aber keine universelle Chemikalienbeständigkeit (Alterung, Versprödung) auf;
- Schraubbare Verbindungen mit Komponenten aus Kunststoff (hierbei in jedem Fall der Auslaufstutzen) unterliegen aufgrund des Kaltflußes einem Abbau des Anzugsmoments und können dadurch undicht werden;
- Geringere Kosten : bei einer festen Verbindung mittels Kleben oder Schweißen wird auf die Überwurfmutter und die Ringdichtung verzichtet (Kosteneinsparung);
- Die Entnahmearmatur wird vorzugsweise in komplettierten und vorgeprüften Zustand mit dem Innenbehälter verbunden.

Dabei können in vorteilhafter Weise alle Konstruktionsarten von Auslaufarmaturen, wie z.B. Klappenhahn, Schieberhahn, Kugelhahn, etc. zur Anwendung kommen.

Die Verbindung beim Verschweißen (bzw. Verkleben) von Armatur und Innenbehälter erfolgt nach dem Blasformvorgang an dem abgekühlten Kunststoff-Innenbehälter in einem separaten Arbeitsgang unter reproduzierbaren kontrollierten Fügebedingungen wie z. B., optimaler Fügezeit, Fügetemperatur, Fügedruck etc.

Im Gegensatz zu einfach angeblasenen Gewinden auf Blasformteilen (ungenaue Gewindeausbildung, schlechte Reproduzierbarkeit) weisen kalibrierte Gewindestutzen eine gute Reproduzierbarkeit mit exakter Ausbildung der äußeren Gewindegänge auf (etwa wie beim Spritzgußverfahren), da die Gewindestutzen innenseitig auf einem Blasdorn gehalten und außenseitig das Gewinde von einem geteilten Gewindekaliberstück in der Formtrennebene der zweigeteilten Blasform oder einem entsprechenden Formschieber angedrückt und ausgeformt wird.

Die Komponenenten Innenbehälter und Armatur weisen folgende Merkmale auf :
- Bei dem Innenbehälter mit ankalibriertem Auslaufstutzen ist keine nachträgliche Bearbeitung des Innenbehälters notwendig, um die Auslauföffnung zu erzeugen; dies geschieht im Blasprozeß selbst.
- Es sind definierte Wandstärken (Außen- und Innenkontur durch Formeinsatz bzw. Blasdorn-Nadel definiert) im Auslaufstutzen realisierbar.
- Im Bereich des Auslaufstutzens sind reproduzierbare begrenzte, erhöhte Wanddicken des Innenbehälters realisierbar, verbunden mit Festigkeitsgewinn und Materialgewinn für die nachfolgende Verschweißung. Die direkte Kontaktfläche für die Verschweißung kann annähernd frei gestaltet und schweißtechnisch optimiert werden.
- Beim Schweißvorgang (bzw. Klebevorgang) wird der kalibrierte Gewindestutzen in einer zangenartigen Fixiervorrichtung, die mittels zweier Halbschalen mit Innengewinde exakt in das Außengewinde des Auslaufstutzens eingreift, festgehalten, so daß ein hoher Anpreßdruck während des Schweißens aufgebracht werden kann.

In einer bevorzugten Ausführungsform ist die Kontaktfläche des angeblasenen Auslaufstutzens (mit Außengewinde) für die Verschweißung mit nach innen abfallender Schräge versehen, wodurch ein besseres Anschmelzen des Kunststoffmaterials erreicht wird.

In einer anderen bevorzugten Ausführungsform ist die Kontaktfläche des angeblasenen Auslaufstutzens (z. B. mit Flanschrand) für die Verschweißung flach ausgeführt.

In vorteilhafter Weise ist dabei die Außenkontur des ankalibrierten Stutzens derart ausgeführt, daß ein sicherer mechanischer Gegenhalt zum Aufbringen des für einige Schwießverfahren [z.B. dem Spiegelschweißen] notwendigen mechanischen Fügedrucks gegeben ist.

Die aufgeschweißten Verbindungen sparen die Ringdichtung und Überwurfmutter ein; sie stellen eine erheblich geringere Fehlerquelle für Undichtigkeiten dar, weil üblicherweise die verwendete Ringdichtung sehr oft altert oder von agressivem Füllgut angegriffen wird (z. B. Aufquellen, Verspröden).

Bei einer weiteren bevorzugten Ausführungsform ist die Außenkontur des kalibrierten Auslaufstutzens mit einem Schraubgewinde versehen (universeller Stutzen!).

Beim Schweißvorgang greift ein Werkzeug zum Fixieren des Auslaufstutzens in sein Außengewinde ein, so daß ein hoher Fügedruck beim Einschweißen des Rohrförmigen Anschlußstückes der Auslaufarmatur aufgebracht werden kann.

Diese derart ausgestalteten Innenbehälter können somit für aufgeschraubte oder aufgeschweißte Auslaufarmaturen verwendet werden. Dabei ergibt sich folgender Vorteil : Aufgeschweißte Auslaufarmaturen können bei einer Rekonditionierung durch einfache mechanische Trennung der fest miteinander verbunden Komponenten Auslaufhahn und Innenbehälter entfernt werden und für eine weitere Nutzung sehr einfach durch eine aufschraubbare Armatur mit Dichtung und Überwurfmutter ersetzt werden, wie es heutzutage bei üblichen gebrauchten Palettencontainern praktiziert wird.

Die erfindungsgemäße Auslaufarmatur aus Kunststoff ist vorzugsweise mit einem verlängerten Einführstutzen ausgeführt, der im Durchmesser (außen z. B. 62,5 mm) auf den Innendurchmesser des Auslaufstutzens (ca. 63,5 mm) möglichst enganliegend abgestimmt ist, so daß eine paßgenaue und problemlose Einfügung mit optimaler Materialverschmelzung an den Schweißflächen ermöglicht ist. Der Auslaufstutzen weist eine Länge von etwa 20 bis 50 mm, vorzugsweise ca. 35 mm, auf.

Der verlängerte Einführstutzen (ca. 20 bis 40 mm, vorzugsweise ca. 30 mm) nimmt bei mechanischen Belastungen in der Prüfung (insbesondere Falltest) und in der Anwendung (Anschluß von Schlauchverbindungen oder sonstigen Kupplungen an die Auslaufarmatur) die auftretenden Kräfte mit auf und entlastet so die Schweißverbindung (hohe Biegesteifigkeit). Die Ausführung der Auslaufarmatur ist im Bereich der Verschweißung (Einführstutzen und Schweißflansch) vorzugsweise derart ausgeführt, daß die gleiche Armaturkonstruktion mit einer entsprechenden Überwurfmutter und Dichtung als schraubbare Armatur Verwendung finden kann.

Das runde Anschlußstück der Auslaufarmatur mit Schweißflansch wird mit der Stirnseite des am Kunststoff-Innenbehälter ankalibrierten Auslaufstutzens verschweißt. Diese Stirnseite des Auslaufstutzens ist vorzugsweise von außen nach innen angeschrägt, so daß beim Verschweißen zunächst die abgeschrägte Spitze der Abschrägung abgeschmolzen wird und dabei blasformtechnisch bedingte Toleranzen des Auslaufstutzens ausgeglichen werden. Die Außenkontur des kalibrieten Stutzens mit Flanschrand oder Außengewinde ist derart ausgeführt, daß ein sicherer mechanischer Gegenhalt zum Aufbringen der für ein Schweißverfahren notwendigen mechanischen Fügedruckes gegeben ist.

Die Erfindung wird nachfolgend anhand von in den Zeichnungen dargestellten Ausführungsbeispielen näher erläutert und beschrieben. Es zeigen :
- Figur 1: einen erfindungsgemäßen Palettencontainer,
- Figur 2: eine Entnahmearmatur in Längsschnittdarstellung,
- Figur 3: eine Entnahmearmatur in Frontansicht,
- Figur 4: eine Längsschnittdarstellung A - A der Entnahmearmatur gem. Fig. 3,
- Figur 5 a: eine Seitenansicht der Entnahmearmatur vor dem Verschweißen,

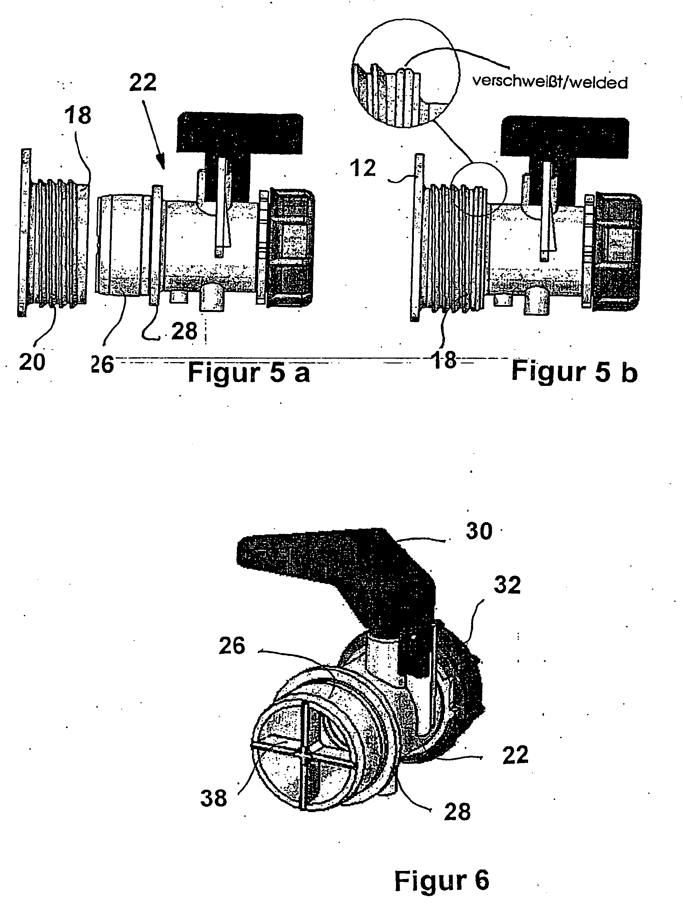

- Figur 5 b: eine Seitenansicht der Entnahmearmatur nach dem Verschweißen und
- Figur 6: eine perpektivische Ansicht der Entnahmearmatur

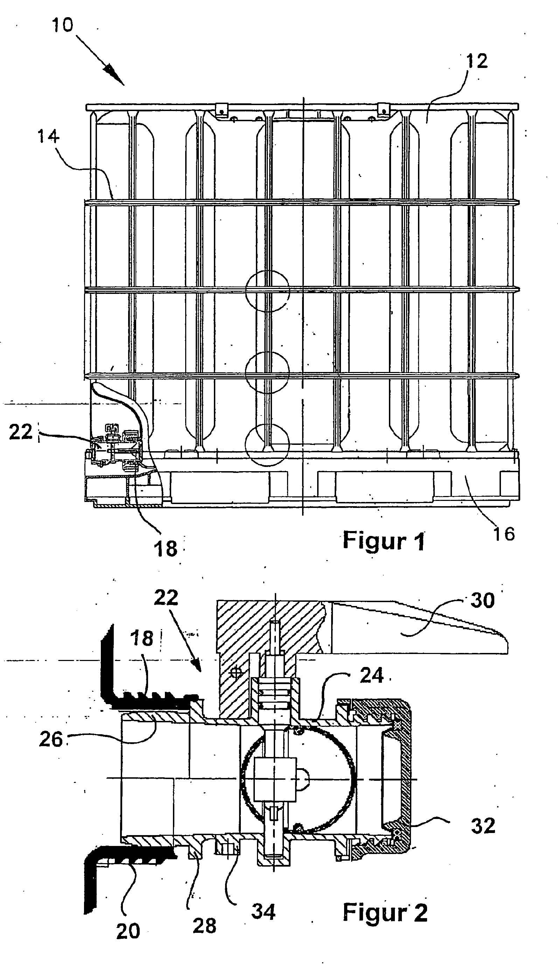

In Figur 1 ist mit der Bezugsziffer 10 ein Palettencontainer bezeichnet, der einen dünnwandigen Innenbehälter 12 aus thermoplastischem Kunststoff, einen den Kunststoff-Innenbehälter 12 als Stützmantel dicht umschließenden Gitterrohrrahmen 14 und eine Bodenpalette 16 aufweist, auf welcher der Kunststoff-Innenbehälter 12 aufliegt und mit welcher der Gitterrohrrahmen 14 fest verbunden ist. Zur Entnahme des flüssigen Füllgutes weist der Kunststoff-Innenbehälter 12 seitlich unten, etwa mittig in einer Seitenwandung im Nahbereich seines Bodens einen angeblasenen, kalibrierten rohrförmigen Stutzen 18 mit Außengewinde 20 auf, auf welches eine verschließbare Entnahmearmatur 22 aufschraubbar ist. Der Stutzen 18 könnte jedoch auch mit einem Flanschrand versehen sein, auf welchem die Entnahmearmatur mittels Spann-Schelle befestigt ist, wobei die Entnahmearmatur als Klappenhahn-, Schieberhahn- oder Kugelhahn- Armatur ausgebildet sein könnte.

Die in Figur 2 dargestellte erfindungsgemäße Entnahmearmatur 22 ist im wesentlichen aus Kunststoff hergestellt und in beispielhafter Ausführungsform mit einem über einen Drehgriff 30 betätigbaren Klappenhahn-Verschluß ausgestattet und außenseitig mit einer Schraubkappe 32 verschlossen. Das Gehäuse 24 der Entnahmearmatur 22 ist behälterseitig mit einem Einführstutzen 26 versehen, der paßgenau bis zu seinem Flanschring 28 in den Stutzen 18 eingesetzt ist. In der unteren Bildhälfte ist der Stutzen 18 mit Außengewinde 20 etwas gegenüber dem Flanschring 28 zurückversetzt dargestellt (Zustand vor dem Verschweißen), während in der oberen Bildhälfte der Stutzen 18 an dem Flanschrand 28 des Gehäuses 24 der Entnahmearmatur 22 anliegt und fest mit diesem verschweißt ist (Zustand nach dem Verschweißen).

Für den Schweißvorgang wird vorzugsweise wegen guter Zugänglichkeit und optimaler Geometrien der Schweißstellen das kostengünsige Spiegelschweißverfahren angewendet. Dabei wird die Entnahmearmatur in vollständig komplettierten und vorgeprüften Zustand auf den Auslaufstutzen aufgeschweißt. Bei dem aus der Blasform entnommenen Innenbehälter ist für den Schweißvorgang keinerlei Nachbearbeitung des Stutzens erforderlich.

Der dünnwandige Kunststoff-Innenbehälter weist üblicherweise eine mittlere Wandstärke von ca. 3 mm auf, während der kalibrierte Stutzen für die Entnahmearmatur bei einer Ausführung mit einem Innendurchmesser von ca. 63 mm eine Wandstärke von ca. 5 mm aufweist. Die konstruktiven Vorzüge der erfindungsgemäßen Ausführung bestehen in : ankalibrierter Stutzen mit schweißgerechter Materialstärke und Fügekontur; Einheitsstutzen mit Außengewinde zum Aufschrauben oder Aufschweißen der jeweiligen wunschgemäßen Entnahmearmatur; langer Einführ- und Entlastungsstutzen an der Armatur mit hoher Belastbarkeit für Biegebeanspruchung bei häufigem Betätigen des Drehventils. Für zähfließende Füllgüter können ebenso Stutzen und Entnahmearmaturen mit größerer Nennweite bzw. größerem Durchmesser von ca. 80 mm oder sogar 120 mm bis 150 mm vorgesehen sein. Dabei zeigt sich : Je größer der Durchmesser, desto besser und sicherer ist eine feste Verbindung (verschweißt oder verklebt) von Stutzen und Entnahmearmatur im Vergleich zu einer herkömmlichen Schraubverbindung.

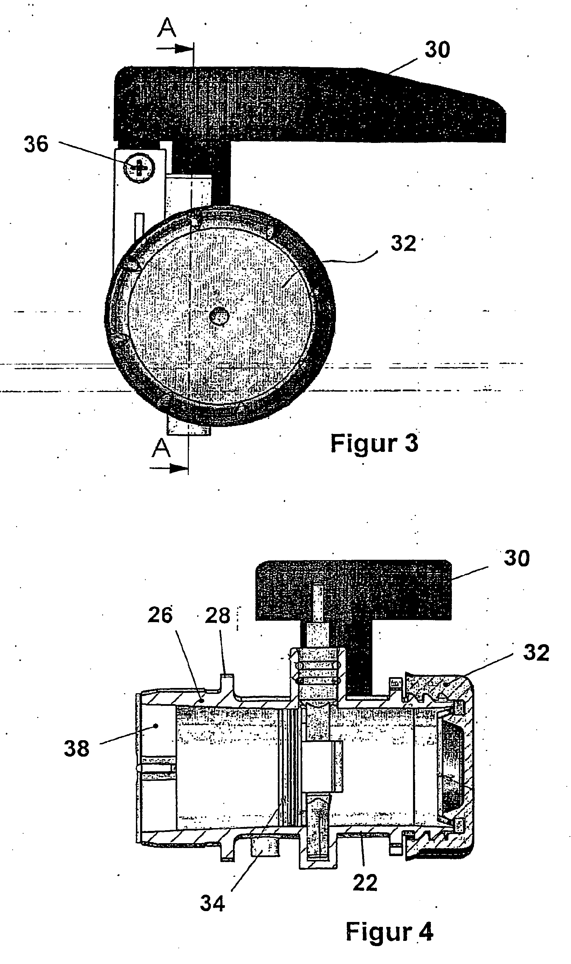

In Figur 3 ist die Entnahmearmatur 22 in Frontansicht dargestellt, wobei im wesentlichen die vordere Schraubkappe 32 und der Drehgriff 30 ersichtlich sind. Eine Längsschnittdarstellung entlang Linie A-A dieser Entnahmearmatur 22 ist in Figur 4 verdeutlicht. Dabei ist behälterseitig eine als separates Spritzgußteil vorgefertigte Stützeinrichtung 38, die einen ringförmigen Außenrand und ein stern- oder kreuzförmiges Innenteil aufweist, fest in den Einführstutzen 26 der Entnahmearmatur 22 eingesetzt. Diese kreuzförmige Stützeinrichtung (Kunststoffspritzgußteil mit Faserverstärkung) dient zur Verhinderung einer Ovalisierung des Stutzens 18, die ggf. durch Verzug bzw. Schrumpfung bei ungleichmäßiger Abkühlung des Kunststoff-Innenbehälters in diesem Bereich auftreten könnte.

In Figur 5 a ist noch einmal der Behälterstutzen 18 mit Außengewinde 20 und die Entnahmearmatur 22 vor dem Einsetzen bzw. vor dem Verschweißen dargestellt, während in Figur 5 b der eingeschweißte Zustand gezeigt ist. Dabei ist der Einführstutzen 26 bis zum Flanschring 28 in den Stutzen 18 eingeschoben und die Stirnseite des Stutzens ist mit dem Flanschring 28 fest verschweißt. Eine Nachbearbeitung der Schweißnaht ist hierbei nicht erforderlich.

Figur 6 zeigt noch einmal in perspektivischer Ansicht die in dem Einführstutzen 26 angeordnete quer zum Durchmesser verlaufende kreuzförmige Stützeinrichtung 38, die hier einteilig integriert im Gehäuse 22 der Entnahmearmatur 22 ausgebildet ist.

Bei einer besonderen Ausführungsvariante ist der Palettencontainer für einen Einsatz in explosionsgefährdeten Bereichen bzw. für eine Verwendung von brennbaren Füllgütern vorgesehen; dann ist der Innenbehälter außen antistatisch oder elektrisch ableitend ausgebildet und das Gehäuse der Entnahmearmatur ist ebenfalls aus elektrisch leitendem Kunststoff gefertigt und mit einem Anschluß 34 zum Anschrauben eines Erdungskabel versehen (vgl. Fig. 2).

Der besondere Vorteil dieser vorliegenden Erfindung liegt also darin, daß ein ganz "normaler" Kunststoff-Innenbehälter mit kalibriertem Stutzen 18 und Außengewinde 20 für das Aufschweißen der Entnahmearmatur verwendet wird; es sind keinerlei Veränderungen an der Blasform bzw. dem Blasteil (Innenbehälter) erforderlich. So kann problemlos auf Kundenwünsche eingegangen werden, je nachdem ob ein Palettencontainer mit üblicher, mittels Überwurfmutter aufgeschraubter oder mit fest eingeschweißter Entnahmearmatur gewünscht wird. Und auch ein Palettencontainer mit fest eingeschweißter Entnahmearmatur ist wiederverwendbar. Bei einer Rekonditionierung wird die eingeschweißte Entnahmearmatur einfach abgetrennt, der Stutzen innen ausgefräst und es kann eine neue Armatur aufgeschraubt oder eingeschweißt werden.

Und ein Palettencontainer mit eingeschweißter Entnahmearmatur kann für nahezu alle agressiven Füllgüter verwendet werden, weil eine Rücksichtnahme auf die Anfälligkeit der nicht mehr erforderlichen Dichtung hierbei entfällt.

### Bezugsziffernliste

- **10**: Palettencontainer
- **12**: Innenbehälter
- **14**: Gitterrohrrahmen
- **16**: Bodenpalette
- **18**: Stutzen (12)
- **20**: Außengewinde (18)
- **22**: Entnahmearmatur
- **24**: Gehäuse (22)
- **26**: Einführstutzen (24)
- **28**: Flanschring (26)
- **30**: Drehgriff (22)
- **32**: Schraubkappe (22)
- **34**: Kabelanschluß
- **36**: Sicherungsschraube
- **38**: Stabilisierungskreuz

## Patentansprüche

1. Palettencontainer (10) für die Lagerung und den Transport von flüssigen oder fließfähigen Füllgütern, mit einem dünnwandigen Innenbehälter (12) aus thermoplastischem Kunststoff, mit einem den Kunststoff-Innenbehälter (12) als Stützmantel dicht umschließenden Gitterrohrrahmen (14) und mit einer Bodenpalette (16) , auf welcher der Kunststoff-Innenbehälter (12) aufliegt und mit welcher der Gitterrohrrahmen (14) fest verbunden ist, wobei der Kunststoff-Innenbehälter (12) zur Entnahme des flüssigen Füllgutes seitlich unten, etwa mittig in einer Seitenwandung im Nahbereich seines Bodens einen angeblasenen, gegebenenfalls kalibrierten rohrförmigen Stutzen (18) aufweist, an welchem eine verschließbare Entnahmearmatur (22) befestigbar ist,
**dadurch gekennzeichnet, daß**
die Entnahmearmatur (22) mit ihrem rohrförmigen Gehäuse (24) an den rohrförmigen Stutzen (18) des Kunststoff-Innenbehälters (12) fest angeschweißt oder angeklebt ist.

2. Palettencontainer nach Anspruch 1,
**dadurch gekennzeichnet, daß**
die Entnahmearmatur (22) mittels eines der nachfolgend genannten Verfahren wie das Spiegelschweißen, das Laserschweißen, das Reibschweißen, das Ultraschallschweißen oder das Vibrationsschweißen an den angeblasenen Stutzen (18) des Kunststoff-Innenbehälters (12) angeschweißt ist.

3. Palettencontainer nach Anspruch 1 oder 2,
**dadurch gekennzeichnet, daß**
das Gehäuse (24) der Entnahmearmatur (22) auf der Seite des Kunststoff-Innenbehälters (12) als verlängerter rohrförmiger Einführstutzen (26) mit einem umlaufenden Flanschring (28) ausgebildet ist, wobei der Einführstutzen (26) in den angeblasenen Stutzen (18) des Kunststoff-Innenbehälters (12) eingesteckt und der Flanschring (28) mit der Stirnseite des Stutzens (18) verschweißt ist.

4. Palettencontainer nach Anspruch 1,
**dadurch gekennzeichnet, daß**
das Gehäuse (24) der Entnahmearmatur (22) auf der Seite des Kunststoff-Innenbehälters (12) als verlängerter rohrförmiger Einführstutzen (26) mit einem umlaufenden Flanschring (28) ausgebildet ist, wobei der Einführstutzen (26) in den angeblasenen Stutzen (18) des Kunststoff-Innenbehälters (12) eingesteckt und der Flanschring (28) mit der Stirnseite des Stutzens (18) verklebt ist.

5. Palettencontainer nach Anspruch 1, 2, 3 oder 4,
**dadurch gekennzeichnet, daß**
der kalibrierte Stutzen (18) des Kunststoff-Innenbehälters (12) mit einem Außengewinde (20) versehen ist und eine Länge von etwa 20 bis 50 mm, vorzugsweise ca. 35 mm, aufweist.

6. Palettencontainer nach Anspruch 1, 2, 3, 4 oder 5,
**dadurch gekennzeichnet, daß**
der Einführstutzen (26) der Entnahmearmatur (22) bis zum Flanschring (28) eine Länge von etwa 20 mm bis 40 mm, vorzugsweise ca. 30 mm, aufweist.

7. Palettencontainer nach einem der vorhergehenden Ansprüche 1 bis 6,
**dadurch gekennzeichnet, daß**
der kalibrierte Stutzen (18) des Kunststoff-Innenbehälters (12) für eine bessere Verschweißung an seiner Stirnseite abgeschrägt ausgebildet ist.

8. Palettencontainer nach einem der vorhergehenden Ansprüche 1 bis 7,
**dadurch gekennzeichnet, daß**
in dem Einführstutzen (26) der Entnahmearmatur (22) eine quer zum Durchmesser verlaufende integrierte Stützeinrichtung (38) angeordnet ist.

9. Palettencontainer nach einem der vorhergehenden Ansprüche 1 bis 8,
**dadurch gekennzeichnet, daß**
die Stützeinrichtung (38) als separates Spritzgußteil vorgefertigt ist, und einen ringförmigen Außenrand aufweist, der fest in den Einführstutzen (26) der Entnahmearmatur (22) eingesetzt ist.

10. Palettencontainer nach einem der vorhergehenden Ansprüche 1 bis 9,
**dadurch gekennzeichnet, daß**
das Gehäuse (24) der Entnahmearmatur (22) aus elektrisch leitendem Kunststoff gefertigt und mit einem Anschluß (34) für ein angeschraubtes Erdungskabel versehen ist.

11. Verfahren zur Herstellung eines Palettencontainer (10) für die Lagerung und den Transport von flüssigen oder fließfähigen Füllgütern, mit einem dünnwandigen Innenbehälter (12) aus thermoplastischem Kunststoff, mit einem den Kunststoff-Innenbehälter (12) als Stützmantel dicht umschließenden Gitterrohrrahmen (14) und mit einer Bodenpalette (16) , auf welcher der Kunststoff-Innenbehälter (12) aufliegt und mit welcher der Gitterrohrrahmen (14) fest verbunden ist, wobei der Kunststoff-Innenbehälter (12) zur Entnahme des flüssigen Füllgutes seitlich unten., etwa mittig in einer Seitenwandung im Nahbereich seines Bodens einen angeblasenen, kalibrierten rohrförmigen Stutzen (18) mit Flanschrand oder Außengewinde (20) aufweist, auf welchem eine verschließbare Entnahmearmatur (22) befestigbar ist,
**dadurch gekennzeichnet, daß**
der Kunststoff-Innenbehälter mittels einer entsprechend geformten Haltevorrichtung, die an dem kalibrierten rohrförmigen Stutzen (18) angreift, festgehalten wird und das Gehäuse (24) der Entnahmearmatur (22) mit einem als verlängertem rohrförmig ausgebildeten Einführstutzen (26) mit umlaufendem Flanschring (28) bis zu diesem Flanschring (28) in den Stutzen (18) eingeführt und mit entsprechend auf beide Teile aufgebrachtem Fügedruck die Stirnseite des Stutzens (18) gegen den Flanschring (28) verschweißt oder verklebt wird.

12. Verfahren nach Anspruch 11,
**dadurch gekennzeichnet, daß**
die Entnahmearmatur (22) in komplettiertem und vorgeprüftem Zustand mit dem Innenbehälter verbunden wird.

## Claims

1. Pallet container (10) for the storage and transportation of liquid or free-flowing contents, having a thin-walled inner container (12) made of thermoplastic material, having a tubular lattice frame (14) which tightly encloses the inner plastic container (12) as a supporting casing, and having a base pallet (16), on which the inner plastic container (12) rests and to which the tubular lattice frame (14) is fixed, it being the case that, for the removal of the liquid contents, the inner plastic container (12) has laterally at the bottom, approximately in the centre of a side wall and in the vicinity of its base, a moulded-on optionally calibrated tubular connector (18), on which a closable removal fitting (22) can be fastened, **characterized in that** the removal fitting (22) is welded or adhesively bonded to the tubular connector (18) of the inner plastic container (12) by way of its tubular housing (24).

2. Pallet container according to Claim 1, **characterized in that** the removal fitting (22) is welded to the moulded-on connector (18) of the inner plastic container (12) by means of one of the following processes, for example hot plate welding, laser welding, frictional welding, ultrasonic welding or vibration welding.

3. Pallet container according to Claim 1 or 2, **characterized in that** the housing (24) of the removal fitting (22) is formed, on the side of the inner plastic container (12), as an extended tubular insertion connector (26) with an encircling flange ring (28), the insertion connector (26) being plugged into the moulded-on connector (18) of the inner plastic container (12) and the flange ring (28) being welded to the end side of the connector (18).

4. Pallet container according to Claim 1, **characterized in that** the housing (24) of the removal fitting (22) is formed, on the side of the inner plastic container (12), as an extended tubular insertion connector (26) with an encircling flange ring (28), the insertion connector (26) being plugged into the moulded-on connector (18) of the inner plastic container (12) and the flange ring (28) being adhesively bonded to the end side of the connector (18).

5. Pallet container according to Claim 1, 2, 3 or 4, **characterized in that** the calibrated connector (18) of the inner plastic container (12) is provided with an external thread (20) and has a length of approximately 20 to 50 mm, preferably approximately 35 mm.

6. Pallet container according to Claim 1, 2, 3, 4 or 5, **characterized in that** the insertion connector (26) of the removal fitting (22), up to the flange ring (28), has a length of approximately 20 mm to 40 mm, preferably approximately 30 mm.

7. Pallet container according to one of preceding Claims 1 to 6, **characterized in that** the calibrated connector (18) of the inner plastic container (12) is bevelled on its end side to provide for better welding.

8. Pallet container according to one of preceding Claims 1 to 7, **characterized in that** the insertion connector (26) of the removal fitting (22) has an integrated supporting device (38), which runs transversely to the diameter, arranged in it.

9. Pallet container according to one of preceding Claims 1 to 8, **characterized in that** the supporting device (38) is prefabricated as a separate injection moulding and has an annular outer periphery which is introduced firmly into the insertion connector (26) of the removal fitting (22).

10. Pallet container according to one of preceding Claims 1 to 9, **characterized in that** the housing (24) of the removal fitting (22) is produced from an electrically conductive plastic and is provided with a connection (34) for a screwed-on earthing cable.

11. Method of producing a pallet container (10) for the storage and transportation of liquid or free-flowing contents, having a thin-walled inner container (12) made of thermoplastic material, having a tubular lattice frame (14) which tightly encloses the inner plastic container (12) as a supporting casing, and having a base pallet (16), on which the inner plastic container (12) rests and to which the tubular lattice frame (14) is fixed, it being the case that, for the removal of the liquid contents, the inner plastic container (12) has laterally at the bottom, approximately in the centre of a side wall and in the vicinity of its base, a moulded-on calibrated tubular connector (18) which has a flange periphery or external thread (20) and on which a closable removal fitting (22) can be fastened, **characterized in that** the inner plastic container is secured by means of an appropriately formed retaining arrangement, which acts on the calibrated tubular connector (18), and, by way of an extended tubular insertion connector (26) with encircling flange ring (28), the housing (24) of the removal fitting (22) is inserted into the connector (18) up to this flange ring (28) and, with joining pressure being applied correspondingly to the two parts, the end side of the connector (18) is welded or adhesively bonded against the flange ring (28).

12. Method according to Claim 11, **characterized in that** the removal fitting (22) is connected to the inner container in a state in which it has been completed and subjected to prior testing.

## Revendications

1. Récipient à palette (10) destiné à l'entreposage et au transport de marchandises liquides ou fluides, qui présente un récipient intérieur (12) à paroi mince en matière synthétique thermoplastique, une grille d'encadrement (14) qui entoure étroitement en tant qu'enveloppe de soutien le récipient intérieur (12) en matière synthétique et une palette de fond (16) sur laquelle le récipient intérieur (12) en matière synthétique est placé et à laquelle la grille d'encadrement (14) est reliée solidairement, le récipient intérieur (12) en matière synthétique présentant pour le prélèvement de la marchandise liquide une tubulure (18) optionelle calibrée, réalisée par soufflage, latéralement et dans le bas, sensiblement au milieu d'une paroi latérale et à proximité de son fond, et sur laquelle une vanne refermable de prélèvement (22) peut être fixée,
**caractérisé en ce que**
la vanne de prélèvement (22) est soudée ou collée solidairement par son boîtier tubulaire (24) sur la tubulure (18) du récipient intérieur (12) en matière synthétique.

2. Récipient à palette selon la revendication 1, **caractérisé en ce que** la vanne de prélèvement (22) est soudée sur la tubulure soufflée (18) du récipient intérieur (12) en matière synthétique au moyen d'un des procédés énumérés ci-dessous, par exemple le soudage au miroir, le soudage au laser, le soudage par friction, le soudage par ultrasons ou le soudage par vibrations.

3. Récipient à palette selon les revendications 1 ou 2, **caractérisé en ce que** le boîtier (24) de la vanne de prélèvement (22) est configuré sur le côté du récipient intérieur (12) en matière synthétique sous la forme d'une tubulure d'insertion (26) allongée dotée d'une bride annulaire périphérique (28), la tubulure d'insertion (26) étant enfoncée dans la tubulure soufflée (18) du récipient intérieur (12) en matière synthétique et la bride annulaire (28) étant soudée sur le côté frontal de la tubulure (18).

4. Récipient à palette selon la revendication 1, **caractérisé en ce que** le boîtier (24) de la vanne de prélèvement (22) est configuré sous la forme d'une tubulure allongée d'insertion (26) dotée d'une bride annulaire périphérique (28) sur le côté du récipient (12) en matière synthétique, la tubulure d'insertion (26) étant enfoncée dans la tubulure soufflée (18) du récipient intérieur (12) en matière synthétique et la bride annulaire (28) étant collée sur le côté frontal de la tubulure (18).

5. Récipient à palette selon les revendications 1, 2, 3 ou 4, **caractérisé en ce que** la tubulure étalonnée (18) du récipient intérieur (12) en matière synthétique est dotée d'un filet extérieur (20) et présente une longueur d'environ 20 à 50 mm et de préférence d'environ 35 mm.

6. Récipient à palette selon les revendications 1, 2, 3, 4 ou 5, **caractérisé en ce que** la tubulure d'insertion (26) de l'armature de prélèvement (22) présente jusqu'à la bride annulaire (28) une longueur d'environ 20 à 40 mm et de préférence d'environ 30 mm.

7. Récipient à palette selon l'une des revendications 1 à 6 qui précèdent, **caractérisé en ce que** pour améliorer le soudage, la tubulure étalonnée (18) du récipient intérieur (12) en matière synthétique est biseautée sur son côté frontal.

8. Récipient à palette selon l'une des revendications 1 à 7 qui précèdent, **caractérisé en ce qu'**un dispositif intégré de soutien (38) qui s'étend transversalement par rapport au diamètre est disposé dans la tubulure d'insertion (26) de la vanne de prélèvement (22).

9. Récipient à palette selon l'une des revendications 1 à 8 qui précèdent, **caractérisé en ce que** le dispositif de soutien (38) est préfabriqué sous la forme d'une pièce séparée moulée par injection et présente un bord extérieur annulaire qui peut être inséré solidairement dans la tubulure d'insertion (26) de la vanne de prélèvement (22).

10. Récipient à palette selon l'une des revendications 1 à 9 qui précèdent, **caractérisé en ce que** le boîtier (24) de la vanne de prélèvement (22) est réalisée en une matière synthétique électriquement conductrice et est dotée d'un raccordement (34) pour un câble vissé de mise à la terre.

11. Procédé de fabrication d'un récipient à palette (10) pour l'entreposage et le transport de marchandises liquides ou fluides, qui présente un récipient intérieur (12) à paroi mince en matière synthétique thermoplastique, une grille d'encadrement (14) qui entoure étroitement en tant qu'enveloppe de soutien le récipient intérieur (12) en matière synthétique et une palette de fond (16) sur laquelle le récipient intérieur (12) en matière synthétique est placé et à laquelle la grille d'encadrement (14) est reliée solidairement, le récipient intérieur (12) en matière synthétique présentant pour le prélèvement de la marchandise liquide une tubulure (18) calibrée, réalisée par soufflage, latéralement et dans le bas, sensiblement au milieu d'une paroi latérale, à proximité de son fond, dotée d'une bride de bord ou d'un filet extérieur (20) et sur laquelle une vanne refermable de prélèvement (22) peut être fixée,
**caractérisé en ce que**
le récipient intérieur en matière synthétique est retenu au moyen d'un dispositif de maintien de forme appropriée qui s'engage sur la tubulure (18) calibrée, le boîtier (24) de la vanne de prélèvement (22) qui présente une tubulure allongée d'insertion (26) dotée d'une bride annulaire périphérique (28) étant insérée dans la tubulure (18) jusqu'à cette bride annulaire (28) et le côté frontal de la tubulure (18) est soudé ou collé contre la bride annulaire (28) en appliquant de manière appropriée une poussée de jonction sur les deux pièces.

12. Procédé selon la revendication 11, **caractérisé en ce que** la vanne de prélèvement (22) est reliée au récipient intérieur après avoir été complétée et prétestée.
